# EUROPEAN PATENT APPLICATION

(11) **EP 1 575 311 A1**
(43) Date of publication of application: **14.09.2005**
(21) Application number: 04005973.5
(22) Date of filing: 12.03.2004
(51) Int. Cl.: H04Q 3/00, H04Q 3/66

(54) **Telephone number portability method system and apparatus**

(71) Applicant: SIEMENS AKTIENGESELLSCHAFT, 80333 München (DE)
(72) Inventor: Aures, Wilhelm, Dr., 81479 München (DE); Löwe, Gunnar, 82110 Germering (DE); Schwarzbauer, Hanns Jürgen, Dr., 82194 Gröbenzell (DE); Serroyen, Gert, 2627 Schelle (BE); Verwimp, Gery, 2140 Borgerhout (BE)

(57) **Abstract**

Telephone number portability is provided by decoding a key of an original number dialed into a profile that indicates an operation to be performed on the number dialed. At least one profile that indicates a manner in which the original number dialed is to be affected by an operation to produce a ported telephone number corresponding to the original dialed number.

## Description

### BACKGROUND

### Field of the Invention

The present invention relates to telephone number portability and, more particulary, to providing a profile as a result of the Number Portability Database analysis.

### Related Information.

Telephone number portability is a service that provides residential and business telephone customers with the ability to retain, at the same location, their existing local telephone numbers when switching from one local telephone service provider to another.

In 1996 the US Congress reexamined and changed the Telecommunications Act to promote competition and reduce regulation in all telecommunications markets. Before that time, a major barrier to competition was the inability of customers to switch from one telephone company to another while retaining the same telephone number. Congress directed local telephone companies to offer "telephone number portability."

The problem in more detail is that telephone subscribers have many choices of long distance carriers. Each long distance carrier sets its own rates and separately bills the subscriber. However, telephone subscribers presently have no choice with respect to local telephone service. For example, in the New England area, all local service is provided by NYNEX. In order to introduce competition into the local service market so that a subscriber may select from several local service providers, alternative service providers may own and/or operate switching offices within a local area. However, the present numbering plan described above is not compatible with multiple service providers in a local area. If a subscriber changed service providers, it would be necessary to change directory numbers. To overcome these difficulties, the concept of local number portability has been introduced.

Local number portability (LNP) is a telecommunication service that offers subscribers service provider portability, location portability and service portability. Service provider portability gives subscribers the ability to obtain local telephone service from any service provider that offers services in the subscriber's area, while retaining the same telephone number. Location portability permits subscribers to retain their telephone number when they relocate to a new location outside the serving area of their serving central office. Today, subscribers can retain their telephone number only when they relocate within the serving area of their current serving central office. Service portability allows subscribers to obtain any available telecommunication services, regardless of the capabilities of their current serving central office, while retaining their telephone number. Currently, the service features available to subscribers are determined by the capabilities of their current service central office.

Therefore, due to regulatory requirements an E.164 telephone number could no longer be considered the "property" of a certain telephone company. A customer migrating from the telephone company he originally subscribed to another company within the same local area, is entitled to maintain his originally assigned E.164 number. E.164 is an ITU-T recommendation which defines the international public telecommunication numbering plan used in the PSTN and some other data networks. Therefore the telephone number alone could no longer serve as "routing" number in all circumstances.

Before setting up a call to the called party, it has to be ensured whether the called party is migrated to a different operator. This query is sent to and answered by e.g. a Number Portability Database (NBDB). The main problem of this database is the mere number of entries that must be retrievable. Potentially, e.g. in the US telephone network with about 200.000.000 different subscribers it has to be possible to have all subscribers in that database.

The government has defined and mandated three basic types of number portability: service provider portability, location portability, and service portability. The three types may be combined to form variations on NP services. Service provider portability, as defined in the Telecommunications Act of 1996, is the ability of end users to retain, at the same location, existing directory numbers as they change from one service provider to another. Historically, all directory numbers (DNs) in one NPA-NXX were assigned to a single telephone switch. The incumbent had a significant advantage in retaining customers by controlling or in effect, owning the customer's telephone number. If a customer wanted to change local service providers, he or she was faced with the significant inconveniences of a new phone number, including distributing the new number to all of his or her family, friends, and business contacts. So, in order to facilitate competition at the local exchange, the FCC mandated that all numbers be portable to all local-exchange competitors (ILECs, CLECs, cellular, etc.).

With the introduction of service provider portability, individual DNs in one NPA-NXX may be moved to a different telephone switch. Therefore, the first six digits of a DN (NPA-NXX) will no longer uniquely identify the switch that serves that customer. In order to now identify the correct switch, the concept of a location routing number (LRN) was introduced by industry experts and approved by the FCC. Each switch that hosts portable numbers will have a 10-digit LRN assigned to it that will be used in routing a call to that switch.

The order calls for porting only within a rate center. A rate center, or the "portability domain," is an area (usually under the jurisdiction of the state Public Utilities Commission) in which DNs can be ported. All LNP-capable network elements, including service switching points (SSPs), mobile switching centers (MSCs), signal transfer points (STPs), and signal control points (SCPs), will maintain a list of NPA-NXXs that are considered portable.

Location portability, as defined in the First Report & Order, Docket No. 95-116, is the ability of users of telecommunications services to retain existing directory numbers without impairment of quality, reliability, or convenience when moving from one physical location to another. In this case, a given telephone number can be associated with any network termination device, independent of location. Location will allow customers to take their DN when they move to another geographic location outside of the original rate center. In the Second Memorandum Opinion and Order on Reconsideration regarding FCC Docket 95-116, the FCC concluded that nothing in the Act would preclude them from mandating location portability in the future; however, they had no plans to address location portability at this time.

Service portability, as defined in the First Report & Order, Docket No. 95-116, released July 2, 1996, is the ability of users of telecommunications services to retain existing directory numbers without impairment of quality, reliability, or convenience when switching from one service to another service provided by the same telecommunications carrier. The FCC is not addressing service portability at this time and requirements for service portability are still undefined.

The problem with this and other number portability techniques is that, to retrieve a result, the originally dialed number of the called party is used as a key to access the database. In other words, the usual access methods for retrieving the result, e.g., binary or digit tree are used. The result contains the information to be used for setting up the call in case the called party has been ported to another operator. One of the regulatory requirements with number portability is, that the ported subscriber maintains his originally assigned E.164 address. Therefore, the result of the NP-DB lookup reproduces to a large extent the key that was used to access the result. Therefore the information implicitly contained in the digit tree is repeated in the result section.

### OBJECTS & SUMMARY OF THE INVENTION

An object of the invention is to provide number portability. The basic idea behind this invention is the fact, that many results retrieved from the NP-DB could as well described by a sort of "translation rule" or "translation profile" that has to be applied to the called party address that was used as a key for accessing the NP-DB. In turn, having the translation profiles, many keys could point to the same translation profile. In case a certain key could not be described in terms of a translation profile, the result for that key could still be kept as "individual result" as in conventional NP-DBs.

As an additional feature, the invention keeps track of the usage for the different translation profiles using a counter. The counter is part of every translation profile that is simply incremented every time a new DB entry is created referencing this specific profile. Of course, if an entry is removed, e.g. due to a further migration of the subscriber, this counter is decreased and, if necessary, the counter of another translation profile is incremented.

The combination of both, individual results and translation profiles brings a real advantage in reducing the amount of memory to store the results in the NP-DB.

### BRIEF DESCRIPTION OF THE DRAWINGS

Fig. 1 shows the overall NPDB system;
Fig. 2 shows a call porting operation;
Fig. 3 shows the previous NPDB structure; and
Fig. 4A and 4B show the present invention.

### DETAILED DESCRIPTION OF THE PREFERRED EMBODIMENTS

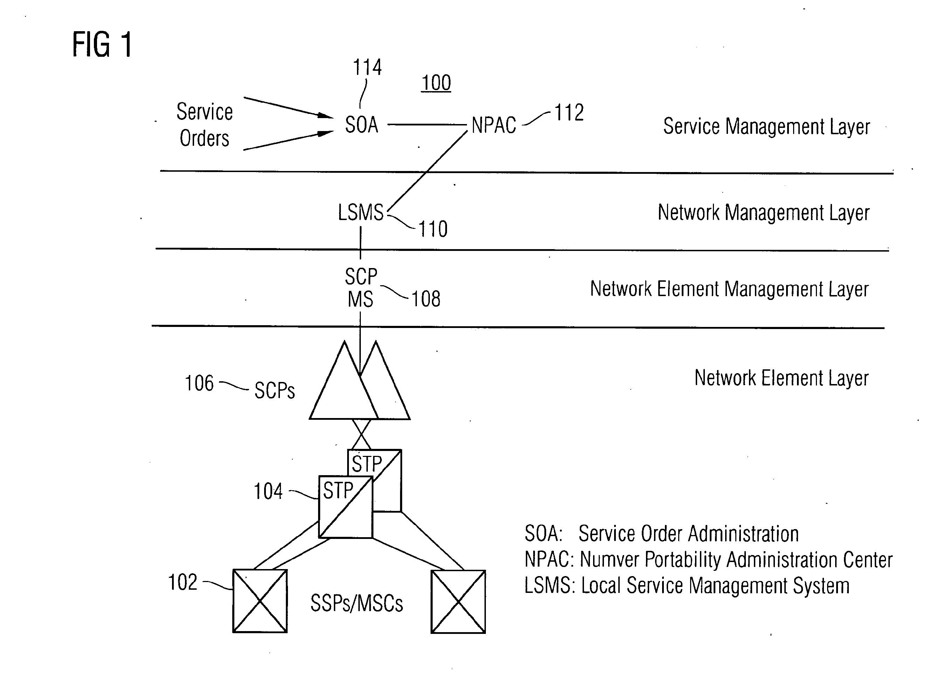

The LNP Architecture and Processes 100 for number portability will now be described with reference to Fig. 1. Architecturally, there are seven basic components required to deploy LNP: the SSP 102, the STP 104, the SCP 106, the SCP management server (SCP MS) 108, the local service management system (LSMS) 110, the NPAC 112, and service order administration (SOA) 114 capability. Figure 1 illustrates the telecommunications management network (TMN) reference architecture for the seven LNP components.

SOA 114 provides the necessary functionality to interface to carriers' order and provisioning systems to update the NPAC 112 with ported TN data for access by all other carriers. The SOA's 114 primary functions may include the following: subscription audit request/management, data administration, data transfer to the NPAC 112, report generation, bulk file parse and upload, subscription tracking, legacy order entry interface, and logging. Depending on an individual service provider's requirements, the SOA 114 may interface with multiple NPACs 112 to allow for nationwide number portability. The carrier-to-SOA 114 connection may be custom-designed to interface with existing carrier order-entry systems. However, the SOA 114 interface to the NPAC 112 is a common management information service element (CMISE), providing subscription-management functions as well as logging, error reporting, and alarm functions. Specific industry-approved interface requirements are contained in the NANC Functional Requirements Specifications (FRS) and Interoperable Interface Specification (IIS).

On July 2, 1996, the FCC issued an order in Docket No. 95-116 describing the third-party, neutral database administration function in support of number portability. This database is designed to receive information from both the incumbent and new service providers, validate the information received, and download the new routing information when an "activate" message is received indicating that the customer has been physically connected to the new service provider's network. Each ported number is a "subscription version" within NPAC 112 that contains the new service provider's I.D., the LRN associated with the new switch, and routing data associated with additional services the customer may request (i.e., line information database [LIDB], calling name delivery [CNAM]).

The NPAC 112 also maintains a record of all ported numbers and a history file of all transactions relating to the porting of a number. The NPAC 112 provides audit functionality and the ability to retransmit subscription version information to local service-management systems under certain conditions. The NPAC 112 is not involved in real-time call processing.

The NPAC 112 provides management, administration, oversight for and integration of the NPAC 112 operations, hardware and software development, and all maintenance-related functions. It has responsibility for achieving performance standards established by the industry and providing user and technical support services and training for industry participants on an ongoing basis.

The LSMS 110 is a fault-tolerant hardware and software platform that contains the database of information required to enable routing and call completion to ported telephone numbers. The primary functions of the LSMS 110 are subscription management, network data management, service provider data management, error processing and notification, transaction event logging and reporting, transmission of activation/deactivation events to the network elements, and audits.

The LSMS 110 interface with the NPAC 112 provides real-time activation/deactivation information upon download from the NPAC 112 and can send responses to the NPAC 112 once a message or subscription version is processed. Similar to the SOA, the interface between the LSMS 110 and the NPAC 112 is CMISE and contains capabilities for event logging, security, and alarming. The LSMS 110 is expected to mirror NPAC 112 ported routing information and has the functionality to request updates from the NPAC 112 in a variety of ways if database synchronization is in question. Specific industry-approved interface requirements are contained in the NANC FRS and IIS.

The SCP management system 108 provides interface services between the LSMS 110 and the SCP106. The SCP MS 108 may or may not be physically integrated with the SCP 106.

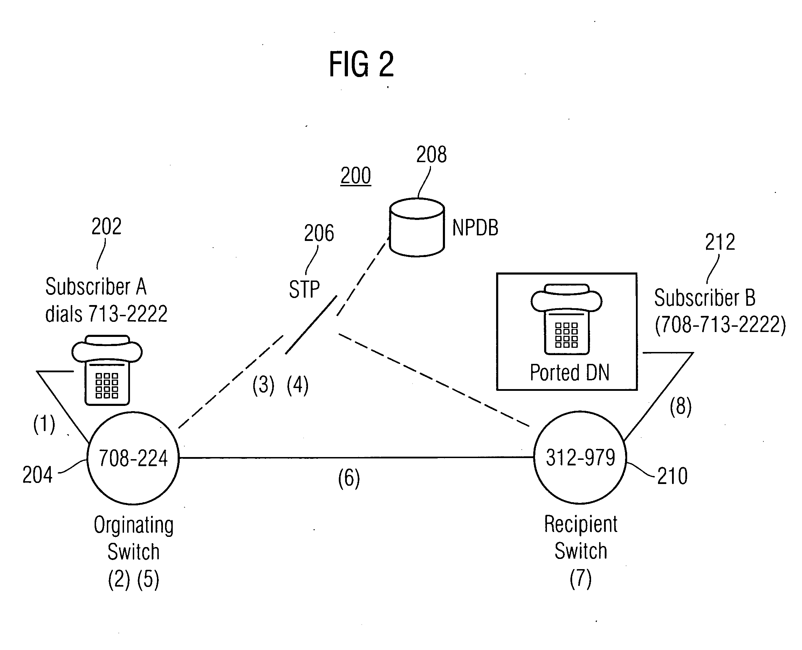

The NPDB (Fig. 2) is the network element that contains the routing information necessary to support number portability. The NPDB provides the association between the called party and the carrier LRN, identifying the switch to which the call should now be routed. The NPDB stores all ported numbers within the ported domain. Carriers today have the option of choosing between two different LNP database architectures for accessing the LRN associated with a particular DN: an integrated STP/SCP configuration or an STP 104 with an adjunct SCP 106.

This NPDB provides the LRN for a particular DN. The correct routing information for SCP-based services, including LIDB, CNAM, custom local-area signaling services (CLASS), inter-switch voice messaging (ISVM), and wireless short message service (SMS) for a ported DN, is determined by 10-digit global title translation (GTT), also stored in the NPDB.

The SCP 106 is a high-transaction-oriented server that receives intelligent network (IN) and advanced intelligent network (AIN) 0.1 LNP transactional capabilities application part (TCAP) messages or number portability request (NPREQ) messages from the SSPs/MSCs 102 using the SS7 network. As an alternative, some providers deploy an integrated STP/SCP platform, which may also provide for a high transaction rate capability but requires less infrastructure (links and ports).
The STP 104 receives the LRN query from the SSP/MSC, routes the query to the appropriate NPDB, and returns a response to the originating SSP/MSC 108. While the need for a new translation type and the possible need for additional tables were previously identified by Alliance for Telecommunications Industry Standards (ATIS), the basic core functionality of the STP 104 as a network message router has not been impacted.

The SSP/MSC 102 is owned and operated by the exchange carrier. These switch points must be able to generate an SS7 LNP query to the NPDB when a call is placed to a telephone number in a ported domain. A ported domain is an MSA that has implemented number portability. A query is generated on any call to an NPA-NXX that has been designated as portable in the local-exchange routing guide (LERG) and NPAC 112 with at least one ported number and marked as such in the switch routing tables.

Now with respect to Fig. 2, the Call Flow: 200 of a Wireline to Ported Wireline Number will be described.
A wireline customer 202 dials a wireline number that is ported. The SSP 204 queries an internal table that identifies all NPA-NXXs that are portable. If the dialed NPA-NXX is marked as portable, the originating SSP 204 will determine if an SSP 204 query should be launched. A query is not required when the following conditions exist: a) if the called party DN is served by the switch; b) if the call is routed to an operator system or interexchange carrier; c) if an NP query was already made for the call; or d) if the serial triggering limit is exceeded. If none of the preceding conditions exist, the SSP formulates and launches an SS7 TCAP query 206 to the NPDB 208.

The originating switch 204 receives the NPDB response and analyzes the data. The LRN is translated in the NP routing tables and an ISUP route out of the switch is determined. The LRN is stored in the called party number (CdPN) parameter, and the dialed digits are stored in the generic address parameter (GAP) of the ISUP initial address message (IAM). In addition, the forward call indicator (FCI) or number translated indicator is set to indicate a query has been done (set to "translated number").

The call is routed to the recipient switch 210 based on the LRN. The recipient switch receives and processes the contents of the IAM and completes the call to the subscriber 212. If, after the originating switch 204 initiated a query and analyzed the response data, determines the dialed number has not ported the call is routed to donor switch based on the original dialed digits. As with a ported TN, the dialed number is translated in the NP routing tables and an ISUP route out of the switch is determined. The dialed number is stored in the CdPN parameter and the FCI indicator is set to indicate a query has been done. The GAP is not included in the IAM for this scenario. The donor switch receives and processes the contents of the IAM, does digit analysis on the dialed digits, finds the subscriber on the switch, and completes the call.

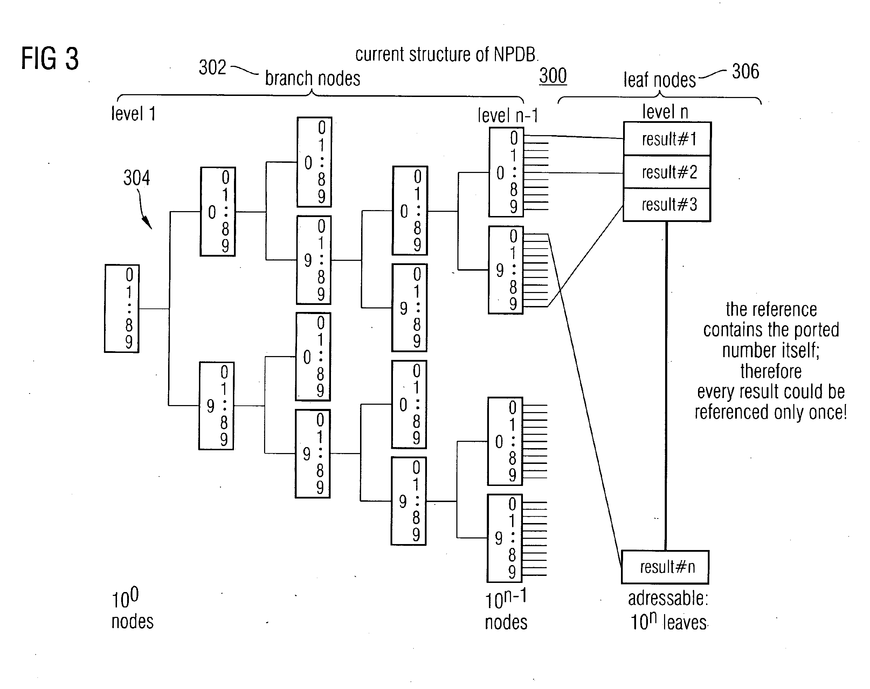

Now turning to Fig. 3, there is shown the current structure of the number portability database 300 the branch nodes 302 comprise binary or digital multiplex source 304, which form a three from a level one multiplexor to a level NMAINS1 multiplexors. The key, typically the dialed number is fed into the three 304 one digit at a time. Such that the first digit is fed into the first digital multiplexor, and depending on the dial of the digit (0...9), the route taking is channeled to the next level multiplexor 0...9, and so forth, until the entire dialed number is decoded in this manner. The result is outputs at the last level and MAINS 1, where the result is directed to the leaf nodes 306, which form ten to the n tower addressable leaves, shown in the figure as results number 1...n. Since the regulations require that the ported subscribers maintains his original assigned E.164 address, the result of this NP-DB look up reproduces, to a large extend, the same key that was used to access the result. Therefore, the current structure of the NP-DB analyses is flood.

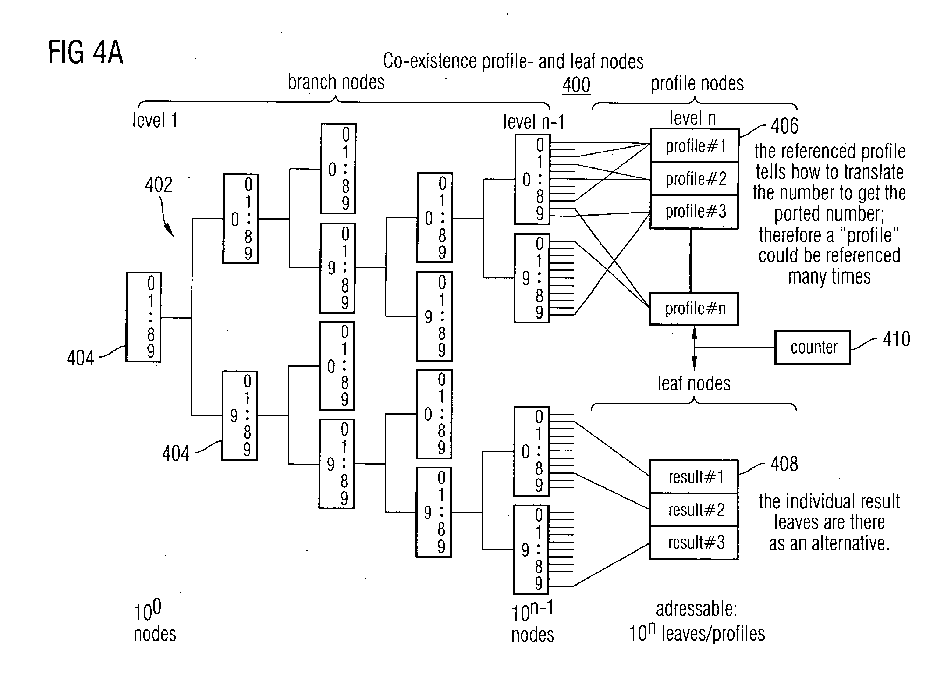

The present invention provides, instead of numerical telephone number results, a translation rule or translation profile that is to be applied to the called partiese's address, as will now be described with reference to Fig. 4A. As in the previous figure, Fig. 4A shows that the NPDB 400 also includes branch nodes 402, which form a digital three of multiplexors 404. Also in similarity to the previous method, a key is fed into the branch nodes 402 to determine a final outcome at level NMAINS 1.

In contrast, the present invention provides a profile, which is a pointer rather than a numerical value representing the ported telephone number. The profile describes the kind of operation or operations that are to be performed on the originally dialed number. These profiles are shown as 406 in the figure.

The profile is defined here as an operation, which maybe any number of operations. However, the present invention provides that the profile transform the originally dialed number into a certain format which is defined by either an international or national numbering system. The profile may also be in operation that adds a prefix to the originally dialed number. The profile may also be in operation that inserts a number strain (infix) at a given location in the originally dialed number. The profile is also provided as in operation that replaces the originally dialed number with another number. Of course, the profile of the present invention maybe another operation and it should be understood that these operations listed here are not the exhaustive list of operations which the present invention provides.

As will be seen in Fig. 4A, the invention incorporates the old method that provides individual results 408 that are decoded from the original key. This allows for the possibility that the original key is decoded into a telephone number of the ported user.

In addition, the present provides a counter 410 that tracks the usage of the different translation profiles, which is incremented each time a new database entire is created for referencing a specific profile. When an entry is removed, the counter is decremented, such as when the subscriber is further migrated to another service provider.

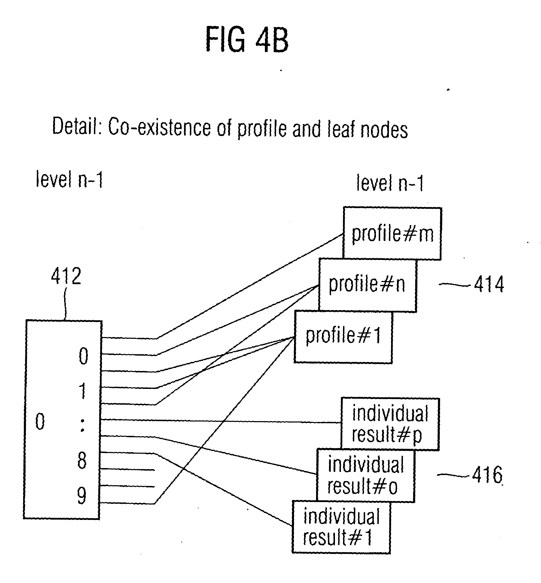

Fig.4B shows the co-existence of the profile and leaf nodes. The level NMAINS 1 multiplexor 412 is shown that is the final stage of decoding the key, which results in one of the profiles or the individuals results 414, 416 respectively. It would be noticed that the profile may be couple to any of the 0..9 outputs of the multiplexor 412, meaning that any of the outputs maybe profiles.

With the present invention, there is no more problems that the ported number provides the same information as the key input to the NPDB. Further, the combination of both the translation profiles and the individual results is twice as advantages. It should be also noted that the translation profiles reduces the amount of memory needed to store all of the NPDB results because, as previously mentioned, more than one key may lead to a profile.

These and other advantages are provided by the present invention, wherein the embodiment described illustrates but a single variation of the invention and, it shall be appreciated that other variations and modifications maybe made to the above-mentioned description within the spirit of the invention.

## Claims

1. A method for telephone number portability, comprising the step of:
decoding a key, comprising an original number dialed, into a profile that indicates an operation to be performed on the number dialed; and
creating at least one profile that indicates a manner in which the original number dialed is to be affected by an operation to produce a ported telephone number corresponding to the original dialed number.

2. The method of claim 1, wherein the step of creating at least one profile creates a profile that indicates to transform the original dialed number into an international number according to an international telephone number encoding format.

3. The method of claim 1, wherein the step of creating at least one profile creates a profile that indicates to transform the original dialed number into an national number according to a number encoding format.

4. The method of claim 1, wherein the step of creating at least one profile creates a profile that indicates to add a prefix to the original number dialed.

5. The method of claim 1, wherein the step of creating at least one profile creates a profile that indicates to insert a string at a given location in the original number dialed.

6. The method of claim 1, wherein the step of creating at least one profile creates a profile that indicates to replace a string of the original number dialed at a given location and length is replaced with on other string

7. The method of claim 1, wherein the step of creating at least one profile creates a profile that indicates to replace the original number dialed with another number.

8. An apparatus for telephone number portability, comprising:
a digit tree for decoding a key representing an original number dialed; and
at least one profile node that indicates from an output of the digit tree pointing to profile node a manner in which the original number dialed is to be operated to produce a ported telephone number corresponding to the original number dialed.

9. The apparatus of claim 8, wherein the digit tree is comprised of multiplexors that decode each digit of the original number dialed.

10. The apparatus of claim 8, wherein the digital tree is constructed in accordance with requirements of Number Portability Database (NPDB).

11. The apparatus of claim 8, further comprising a counter for counting a number of profiles.

12. An improved Number Portability Database apparatus for telephone number portability, comprising:
a digit tree for decoding a key representing an original number dialed;
at least one result node that outputs a numerical value indicating a ported number corresponding to the original dialed number; and
at least one profile node that indicates from an output of the digit tree pointing to profile node a manner in which the original number dialed is to be operated to produce a ported telephone number corresponding to the original number dialed.

13. The apparatus of claim 12, further comprising a counter for counting a number of profiles.
